# EUROPEAN PATENT SPECIFICATION

(11) **EP 0 275 440 B1**
(45) Date of publication and mention of the grant of the patent: **22.09.1993**
(21) Application number: 87117976.8
(22) Date of filing: 04.12.1987
(51) Int. Cl.: G01N 27/26, G01N 21/64

(54) **Photo detection system for DNA base analysis**
Photodetektionssystem für die DNA-Basen-Analyse
Système photo-électrique de détection pour l'analyse des bases de l'ADN

(30) Priority: 23.01.1987 JP 12363/87
(43) Date of publication of application: 27.07.1988
(73) Proprietor: HITACHI, LTD., Chiyoda-ku, Tokyo 101 (JP)
(72) Inventor: Kambara, Hideki, Hachioji-shi (JP); Nishikawa, Tetsuo Hitachi Daiyon Kyosinryo, 14-6, Kokubunji-shi (JP)
(74) Representative: Strehl Schübel-Hopf Groening & Partner

(56) References cited:
- US-A- 4 239 612
- NATURE, vol. 321, 12th June 1986, pages 674-679; L.M. SMITH et al.: "Fluorescence detectionin automated DNA sequence analysis"

## Description

### BACKGROUND OF THE INVENTION

The present invention relates to a photo detection system for DNA base analysis or a fluorescent labelled DNA detection system such as DNA probe.

The conventional method of DNA base analysis or determination includes labelling DNA fragments with radioactive phosphorus (³²P), subjecting the labelled DNA fragments to an electrophoresis separation, and transferring a DNA fragment pattern after the electrophoresis separation of the DNA fragments onto an X-ray film through autoradiography. In recent years, there has been proposed a method in which nucleic acid base order are determined by labelling the nucleic acid fragments with fluorescent substances or dye such as FITC (fluorescein isothiocyanate), TRITC (tetramethyl rhodamine isothiocyanate) or Texas Red (sulforhodamine 101) which are usually used for labelling of protein, and exciting the fluorescent labelled DNA fragments by a U.V. laser or Ar laser (488 nm, 514 nm) to detect fluorescence generated by the excitation (see Nature 321, 674 (1986)).

However, a difficulty in such a fluorescent labelled DNA detection method was that a sufficient sensitivity cannot be obtained. Namely, there was a problem that when it is desired to detect DNA by irradiating fluorescent labelled DNA with light after or during the electrophoresis thereof in a gel, feeble fluorescence emanating from the DNA cannot be detected since scattering light and fluorescence emanating from the gel are observed in addition to fluorescence emanating from the fluorescent labelled DNA.

### SUMMARY OF THE INVENTION

An object of the present invention is to solve the above-mentioned problem or to detect a fluorescent labelled DNA with a high sensitivity.

Based on the review of the spectral characteristics of fluorescence from a gel obstructing the mesaurement, the research of causes, and the careful selection of an excitation light source and a fluorescent dye, the present invention uses as the excitation light source a laser having a wavelength not smaller than 530 nm to reduce fluorescence from the gel and hence to relatively enhance fluorescence from the fluorescent dye, thereby achieving the above-mentioned object.

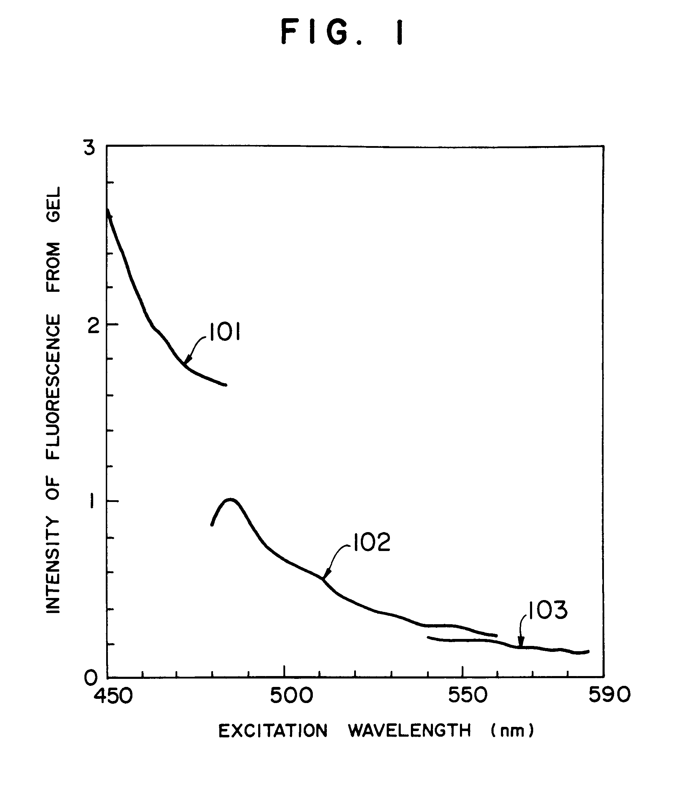

The optimum excitation wavelength and maximum fluorescence emission wavelength of etenoadenosine, FITC, TRITC and Texas Red used as fluorescent substances for labelling of DNA fragments are 300 nm and 410 nm, 490 nm and 520 nm, 550 nm and 580 nm, and 580 nm and 605 nm, respectively. A YAG laser (fourth harmonics with 265 nm) or Ar laser (488 nm, 514.5 nm) is used as a laser which is suitable for the excitation of those dyes and has a relatively large output. On the other hand, the intensity of fluorescence from the gel greatly changes depending on the excitation wavelength and the fluorescence emission wavelength. Fig. 1 shows the excitation wavelength dependence of the intensity of the fluorescence from the gel. In Fig. 1, the wavelengths of fluorescence emission from the gel are made coincident with the maximum fluorescence emission wavelengths of the respective dyes. Namely, curve 101 in Fig. 1 represents the fluorescence with an emission wavelength of 520 nm, curve 102 the fluorescence with 580 nm, and curve 103 the fluorescence with 605 nm. From Fig. 1, it is seen that as each of the excitation wavelength and the fluorescence emission wavelength increases, the fluorescence from the gel decreases. The fluorescence from the gel includes a fluorescence component emanating from inpurties contained in the gel material and a fluorescence component associated with the polymerization of acrylamide. Though the latter component is large when the excitation wavelength is small, it decreases as the excitation wavelength increases and becomes very small at the excitation wavelengths not smaller than 530 to 540 nm. Therefore, by using as an excitation light source a laser having a wavelength not smaller than 530 to 540 nm and labelling a DNA fragment with a fluorescent dye having a maximum fluorescence emission wavelength around 600 nm or not smaller than 600 nm, the DNA fragment can be detected with a high sensitivity.

### BRIEF DESCRIPTION OF THE DRAWINGS

Fig. 1 are characteristic curves showing the excitation wavelength dependence of the intensity of fluorescence from a gel;
Fig. 2 shows a general illustration of a measuring system according to an embodiment of the present invention;
Fig. 3 shows excitation spectra of various dyes; and
Fig. 4 are characteristic curves showing the fluorescence emission wavelength dependence of the intensities of fluorescences of dyes normalized by the gel fluorescence.

### DESCRIPTION OF THE PREFERRED EMBODIMENTS

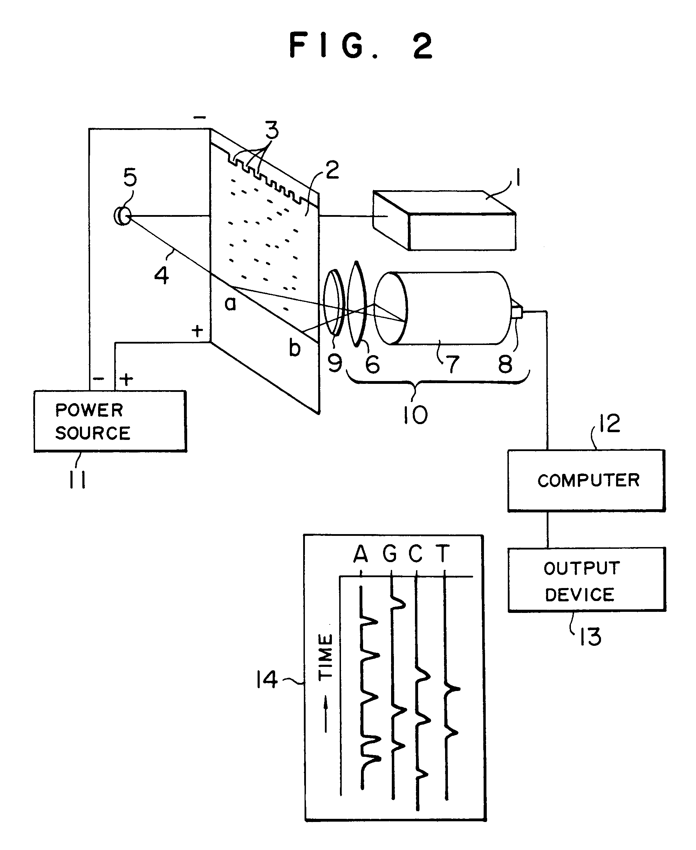

An embodiment of the present invention will now be explained by virtue of Fig. 2.

A measuring system includes a light source 1, an electrophoresis analyzer 2 and a detector system 10. A He-Ne laser having a wavelength of 543 nm and an output power of 1 mW is used as the light source 1. An electrophoresis separation in the electrophoresis analyzer 2 is made using a polyacrylamide slab as an electrophoresis gel plate. A laser beam from the light source 1 is narrowly focused by a lens (not shown) and refrected by a mirror 5 and then the laser beam 4 is incident upon a location of the electrophoresis gel plate apart from a starting point of migration therein by a certain distance. In the present embodiment, the laser beam is incident into the gel in a direction parallel to a plane of the gel, i.e. from the side face of the thin gel plate. However, the laser beam may be obliquely incident from the front or rear surface of the gel plate and scanned.

The preparation of samples are made as follows. Namely, a group {A} of DNA fragments having various lengths are prepared in which one end of each DNA fragment sample is labelled with Texas Red or TRITC (fluorescent substance) and the other end thereof is terminated with an adenin base (A). Similarly, there are prepared DNA fragments groups {G}, {C} and {T} in which the other ends of the fragment samples are terminated with a guanine base (G), a cytosine base (C) and a tymine base (T), respectively. Thus, the four fragment groups are prepared for one kind of DNA, the base sequence of which is to be determined.

These DNA fragment groups are injected into individual wells 3 of the electrophoresis analyzer 2 in which they are subjected to an electrophoresis separation. Since the longer DNA fragment fast migrates while the shorter fragment slowly migrates under the electric field produced by power supply 11, the fragments are band-like separated as shown in Fig. 2 and successively reach the location irradiated with the laser beam in shorter to longer fragment order so that the fragments produce the respective fluorescences therefrom. The fluorescences are passed through a filter 9 and then focused as a fluorescence image onto an image intensifier 7 through a condenser lens 6. The fluorescence image is intensified by the image intensifier 7, detected by a photodiode array 8 and then processed by a computer 12 and the determined sequence is displayed with an output device 13. In the present embodiment, a region between a and b in the location irradiated with the laser beam is detected. Many migration lanes intersect that region. Since paying attention to one migration lane the fluorescence signal increases each time the fluorescent labelled DNA fragment passes through the irradiation line, the change of a signal for each migration lane with respect to time would take such a form as shown in a block 14 of Fig. 2. Since the type (A, G, C or T) of the DNA fragment group injected into each migration lane is known, a DNA base sequence can be determined by sequentially reading signals which appear with the lapse of time.

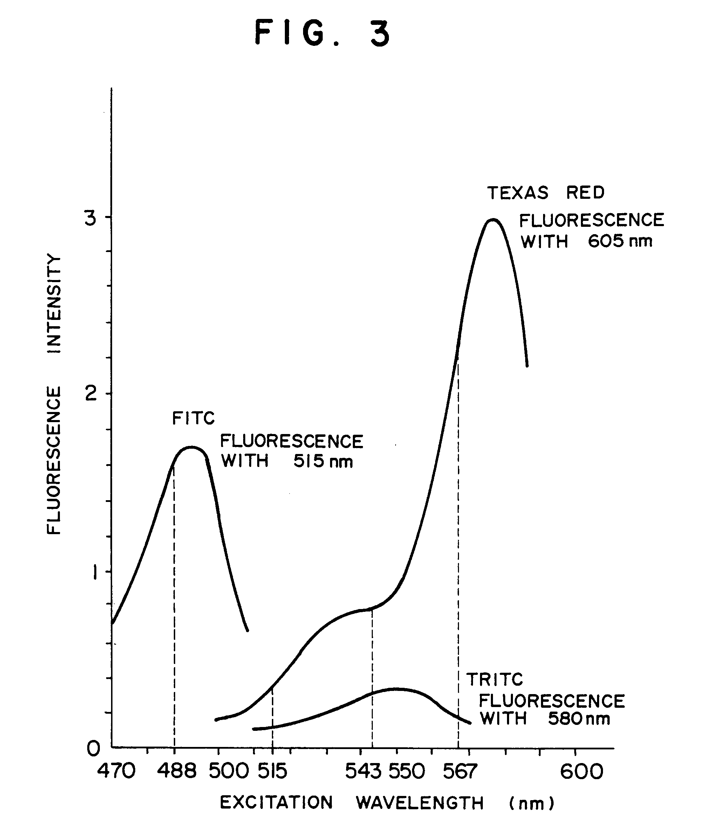

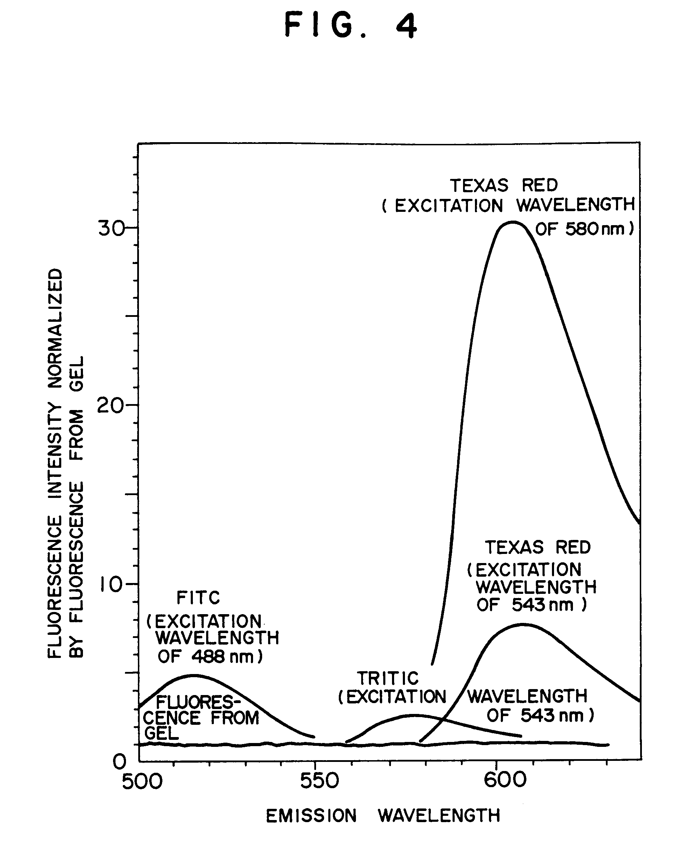

Fig. 3 shows excitation spectra of FITC, TRITC and Texas Red which are used for fluorescent labelling. The concentration of each samples is 10 n moles/ℓ. A 488 nm Ar laser, 543 nm He-Ne laser and 567 nm Kr laser are suitable as excitation light sources for FITC, TRITC and Texas Red, respectively. The intensities of maximum fluorescence emission wavelengths when those lasers are used, are large in the order of Texas Red, FITC and TRITC. Though the intensity of fluorescence of FITC changes depending on the pH value of a solvent it can be estimated to be approximately equivalent to the intensity of fluorescence of Texas Red. However, the fluorescence intensity normalized by the background fluorescence from the gel is greatly different between FITC and Texas Red, as is seen from Fig. 4 which shows the fluorescence intensities of FITC, TRITC and Texas Red when the gel background fluorescence is unity. In Fig. 4, the concentration of each fluorescent substance is 1 n mole/ℓ. The absolute value of the intensity of fluorescence emanating from Texas Red excited by a laser beam of 543 nm wavelength is smaller than that from FITC excited by a laser beam of 488 nm. However, since the intensity of fluorescence from the gel in the case of Texas Red excited by the 543 nm laser beam is smaller than that in the case of FITC excited by the 488 nm laser beam, as is apparent from Fig. 1, the fluorescence intensity of Texas Red relative to the background is larger than that of FITC. As a result, a high sensitivity can be obtained. Thus, the high sensitivity is obtained by use of the 543 nm He-Ne laser which is very cheap as compared with the Ar laser. The actual detection limit depends on the absolute fluorescence intensity as well as the relative fluorescence intensity. Namely, when the absolute fluorescence intensity is large, a fluctuation thereof is small, thereby allowing the detection of a very small amount of fluorescence. Usually, a fluorescence signal from the fluorescent substance is received through an interference filter. The interference filter has a narrow transmission wavelength region and a low transmission efficiency. In the case where the 543 nm He-Ne laser (maximum output: 1mw) having an output lower than the Ar laser (usually, 10 to 20 mW) is used in the present embodiment, it is necessary to design a photo detection system so as to increase the amount of collected fluorescence and/or to make the optimization of the filter design for preventing a loss of the fluorescence. In the present embodiment, a band-pass filter is used which has a wide transmission wavelength region and a high transmission efficiency. The sharper cut-off characteristic of a band-pass filter is better. Usually, a difference between a wavelength at which the transmission efficiency is 0% and a wavelength range over the wavelength transmission region where the transmission efficiency is not lower than 70 to 80%, is not smaller than 20 to 30 nm. Based on Fig. 4, a band-pass filter having a high transmission efficiency in a specific range of 595 to 620 nm but a rapidly decreasing transmission efficiency at wavelenths shorter and longer than the specific range, was designed for the use in the present embodiment. The transmission efficiency of this band-pass filter at 570 nm was approximately 0%. When a 568 nm Kr laser is used as the light source, a sensitivity can be further improved. In that case, however, it is necessary to use a color glass filter in combination with the band-pass filter in order to eliminate scattering light which would otherwise enter the photo detection system. As the light source may also be used a dye laser, a Cu laser or a semiconductor laser which has a wavelength set to 570 to 580 nm.

According to the present invention, a very small amount of fluorescent labelled DNA can be detected with a high sensitivity by utilizing the fluorescence of the fluorescent substance at a wavelength region where the intensity of fluorescence from the gel is low.

## Claims

1. A photo detection system for DNA base analysis for separately detecting DNA fragments labelled with a fluorescent substance, comprising:
an electrophoresis member (2) including a polyacrylamide gel in which the DNA fragments are subjected to an electrophoresis separation;
an excitation light source (1) for irradiating the DNA fragments at a predetermined location of said electrophoresis member with an excitation light beam to excite the fluorescent substance, which has a maximum fluorescence emission wavelength around 600 nm or not smaller than 600 nm; and
a fluorescence detector (10) for detecting fluorescence emanating from the excited fluorescent substance,
characterized in that said excitation light source being a laser which emits the excitation light beam having a wavelength not smaller than 530 nm.

2. A photo detection system for DNA base analysis according to claim 1, wherein said laser (1) is one selected from the group consisting of a He-Ne laser, a Kr laser and a semiconductor laser.

3. A photo detection system for DNA base analysis according to claim 1 or 2, wherein said fluorescent detector (10) includes a fluorescence detecting system having the maximum transmission wavelength region not smaller than 600 nm.

4. A photo detection system for DNA base analysis according to any of the claims 1 to 3, wherein an excitation light source (1) for said fluorescent substance is a laser which emits an excitation light beam having a wavelength of not smaller than 530 nm, and a bandpass filter having a high transmission efficiency in a specific range of 595 to 620 nm is used in the photo detecting system of said fluorescence detector.

5. A photo detection system for DNA base analysis according to any of the claims 1 to 4, wherein said fluorescent substance is one selected from the group consisting of sulforhodamine 101, tetramethyl rhodamine isothiocyanate and derivatives thereof.

## Patentansprüche

1. Photodetektionssystem zur Analyse von DNA-Basen zum getrennten Nachweis von mit einer fluoreszierenden Substanz markierten DNA-Fragmenten, welches umfaßt:
- ein Elektrophorese-Element (2), welches ein Polyacrylamidgel, in welchem die DNA-Fragmente einer Elektrophorese-Trennung unterzogen werden, einschließt,
- eine Anregungslichtquelle (1) zur Bestrahlung der DNA-Fragmente an einer vorbestimmten Stelle des Elektrophorese-Elements mit einem Anregungslichtstrahl, um die fluoreszierende Substanz, welche eine Wellenlänge für die maximale Fluoreszenzemission von ungefähr 600 nm oder nicht weniger als 600 nm aufweist, anzuregen, und
- einen Fluoreszenzdetektor (10) zum Nachweis der durch die angeregte fluoreszierende Substanz ausgesandten Fluoreszenz,
dadurch gekennzeichnet, daß die Anregungslichtquelle ein Laser ist, welcher einen Anregungslichtstrahl mit einer Wellenlänge von nicht weniger als 530 nm emittiert.

2. Photodetektionssystem zur Analyse von DNA-Basen gemäß Anspruch 1, worin der Laser (1) aus der Gruppe bestehend aus einem He-Ne-Laser, einem Kr-Laser und einem Halbleiter-Laser ausgewählt ist.

3. Photodetektionssystem zur Analyse von DNA-Basen gemäß Anspruch 1 oder 2, wobei der Fluoreszenzdetektor (10) ein Fluoreszenzdetektionssystem mit einem Wellenlängenbereich der maximalen Lichtdurchlässigkeit von nicht kleiner als 600 nm einschließt.

4. Photodetektionssystem zur Analyse von DNA-Basen gemäß einem der Ansprüche 1 bis 3, worin die Anregungslichtquelle (1) für die fluoreszierende Substanz ein Laser ist, welcher einen Anregungslichtstrahl mit einer Wellenlänge von nicht kleiner als 530 nm emittiert, und ein Bandpassfilter mit hohem Lichtdurchlässigkeitswirkungsgrad in einem spezifischen Bereich von 595 bis 620 nm im Photodetektionssystem des Fluoreszenzdetektors verwendet wird.

5. Photodetektionssystem zur Analyse von DNA-Basen gemäß einem der Ansprüche 1 bis 4, worin die fluoreszierende Substanz eine aus der Gruppe bestehend aus Sulforhodamin 101, Tetramethylrhodaminisothiocyanat und Derivaten derselben ausgewählte Substanz ist.

## Revendications

1. Système de photodétection pour l'analyse des bases de l'ADN pour la détection séparée de fragments d'ADN marqués avec une substance fluorescente, comprenant :
un élément d'électrophorèse (2) contenant un gel de polyacrylamide, dans lequel les fragments d'ADN sont soumis à une séparation par électrophorèse;
une source de lumière d'excitation (1) servant à irradier les fragments d'ADN en un emplacement prédéterminé dudit élément d'électrophorèse avec un faisceau de lumière d'excitation permettant d'exciter la substance fluorescente, qui possède une longueur d'onde maximale d'émission de fluorescence autour de 600 nm ou non inférieure à 600 nm; et
un détecteur de fluorescence (10) pour détecter la fluorescence émanant de la substance fluorescente excitée,
caractérisé en ce que ladite source de lumière d'excitation est un laser qui émet le faisceau de lumière d'excitation possédant une longueur d'onde non inférieure à 530 nm.

2. Système de photodétection pour l'analyse des bases de l'ADN selon la revendication 1, dans lequel ledit laser (1) est un laser sélectionné parmi le groupe comprenant un laser à He-Ne, un laser au Kr et un laser à semiconducteurs.

3. Système de photodétection pour l'analyse des bases de l'ADN selon la revendication 1 ou 2, dans lequel ledit détecteur de fluorescence (10) contient un système de détection de fluorescence, dont la gamme des longueurs d'onde maximales de transmission n'est pas inférieure à 600 nm.

4. Système de photodétection pour l'analyse des bases de l'ADN selon la revendication 1 à 3, dans lequel une source de lumière d'excitation (1) pour ladite substance fluorescente est un laser qui émet un faisceau de lumière d'excitation possédant une longueur d'onde non inférieure à 530 nm, et un filtre passe-bande possédant un rendement élevé de transmission dans une gamme spécifique entre 595 et 620 nm est utilisé dans le système de photodétection dudit détecteur de fluorescence.

5. Système de photodétection pour l'analyse des bases de l'ADN selon l'une quelconque des revendications 1 à 4, dans lequel ladite substance fluorescente est une substance choisie dans le groupe comprenant la sulforhodamine 101, l'isothiocyanate de tétraméthylrhodamine et des dérivés de ces substances.
